# EUROPÄISCHE PATENTANMELDUNG

(11) **EP 3 088 143 A2**
(43) Veröffentlichungstag der Anmeldung: **02.11.2016**
(21) Anmeldenummer: 16167184.7
(22) Anmeldetag: 27.04.2016
(51) Int. Cl.: B25J 15/00, B25J 17/02, B23Q 3/12, B23Q 11/04

(54) **MODULAR AUFGEBAUTES ROBOTERWERKZEUG**

(30) Priorität: 28.04.2015 DE 102015207812
(71) Anmelder: Schmid & Wezel GmbH & Co. KG, 75433 Maulbronn (DE)
(72) Erfinder: SITZLER, Jan, 76703 Kraichtal (DE)
(74) Vertreter: DREISS Patentanwälte PartG mbB

(57) **Zusammenfassung**

Vorgestellt wird ein Roboterwerkzeug (10) mit einem zum Drehantrieb einer Werkzeugspindel eingerichteten Druckluftantrieb (12), einer Lagerung (14) des Druckluftantriebs und einer mit der Lagerung drehfest verbundenen Kupplungsvorrichtung (18), die zum Kuppeln des Roboterwerkzeugs mit einem Roboter oder einer Werkzeugmaschine eingerichtet ist. Das Roboterwerkzeug zeichnet sich dadurch aus, dass der Druckluftantrieb, die Lagerung und die Kupplung mit Standardwerkzeug zerstörungsfrei voneinander trennbare Module sind.

## Beschreibung

Die vorliegende Erfindung betrifft ein Roboterwerkzeug mit den Merkmalen des Oberbegriffs des Anspruchs 1.

Ein solches Roboterwerkzeug wird von der Anmelderin seit Jahren produziert und vertrieben. Das bekannte Roboterwerkzeug weist einen zum Drehantrieb einer Werkzeugspindel eingerichteten Druckluftantrieb, eine Lagerung des Druckluftantriebs und eine mit der Lagerung drehfest verbundene Kupplung auf, die zum Kuppeln des Roboterwerkzeugs mit einem Roboter oder einer Werkzeugmaschine eingerichtet ist.

Darüber hinaus weist das bekannte Roboterwerkzeug eine Auslenkvorrichtung mit einem spindelseitigen ersten Ende und einem Roboterseitigen zweiten Ende auf. Das erste Ende ist mit dem zweiten Ende elastisch schwenkbar verbunden.

Der Druckluftantrieb und die Lagerung des Druckluftantriebs sind in das schwenkbare erste Ende integriert.

Das roboterseitige zweite Ende der Auslenkvorrichtung ist durch eine starre Verbindung mit einer roboterseitigen Kupplung verbunden. Die Kopplung ist eine genormte Kupplung wie eine HSK 100 oder HSK 63 oder ein Außengewinde, je nach Baureihe des bekannten Roboterwerkzeugs.

Derartige Roboterwerkzeuge werden zum Beispiel zum automatischen Entgraten von Gussteilen und zum Hochglanzpolieren eingesetzt. Dabei hält die Spindel zum Beispiel ein Werkzeug wie einen Hartmetallfrässtift oder einen Profilschleifkörper oder Polierkörper und wird vom Druckluftantrieb mit einer geeigneten Drehzahl angetrieben. Der Roboter fährt mit dem Roboterwerkzeug die zu entgratenden Kanten oder die zu polierenden Flächen ab und das Werkzeug trägt dabei das überschüssige Material ab oder poliert die Fläche.

Ein Beispiel für ein solches Robotersystem sind sogenannte RWA-HSK-Systeme der Anmelderin, die Robotersysteme der RWA-Linie der Anmelderin mit HSK 100 oder HSK 63 Aufnahmen vereinen, um den Einsatz der RWA Komponenten in Werkzeugmaschinen zu erlauben.

Die Auslenkvorrichtung dient dabei dazu, durch ihre elastische Nachgiebigkeit den Kontakt zwischen Werkstück und Werkzeug bei der entlang der zu entgratenden Werkstückkonturen geführten Bahn des Roboterwerkzeugs mit seiner Werkzeugspindel zu gewährleisten und auch Anpresskraftspitzen zu verringern. Die Auslenkvorrichtung erlaubt eine elastisch nachgiebige Auslenkung der Spindel mit dem Werkzeug gegenüber dem starr mit dem Roboter verbundenen Teil des Roboterwerkzeugs.

Das bekannte Roboterwerkzeug ist dazu eingerichtet, nur als Ganzes lösbar mit dem Roboter verbunden zu werden. Die den Funktionen des Druckluftantriebs, der Lagerung des Druckluftantriebs, der Auslenkbarkeit und der Kupplung an den Roboter oder die Werkzeugmaschine zuzuordnenden Strukturen des bekannten Roboterwerkzeuges sind nicht mit Standardwerkzeug, sondern nur mit Spezialwerkzeug, voneinander trennbar.

Änderungen der Bearbeitungsaufgaben, die eine Änderung des Antriebs, der Auslenkbarkeit oder der Kupplung verlangen (zum Beispiel bei einem Wechsel des Roboters oder der Werkzeugmaschine) erfordern daher jeweils ein komplettes, an die jeweilige Bearbeitungsaufgabe, beziehungsweise an die jeweilige Werkzeugmaschine angepasstes Roboterwerkzeug. In einer Produktionsumgebung, in der solche Änderungen vorkommen, müssen entsprechend viele Roboterwerkzeuge vorgehalten werden, was einen hohen Kostenaufwand nach sich zieht.

Das bekannte Roboterwerkzeug ist zumindest in Produktionsumgebungen nicht weiter zerlegbar und es ist auch nicht dafür eingerichtet, in diesen Umgebungen zerlegbar zu sein. Eine Zerlegung erfordert zumindest spezielles Werkzeug und spezielle Kenntnisse über den Aufbau des Roboterwerkzeuges.

Bei dem bekannten Roboterwerkzeug wird ein individuelles Roboterwerkzeug vom Hersteller mit einer bestimmten Kupplung versehen, beispielsweise einer HSK 100, einer HSK 63 oder einem Gewinde. Die jeweils verwendete Kupplung ist ein fester Bestandteil des Roboterwerkzeuges und nicht austauschbar oder allenfalls von Hersteller mit Spezialwerkzeug austauschbar.

Eine Verwendung ein und desselben bekannten Roboterwerkzeuges an verschiedenen Maschinen, die mit unterschiedlichen Kupplungen ausgestattet sind, ist daher nicht möglich. Auch aus diesem Grunde musste der Kunde eine entsprechend große Zahl von kompletten Roboterwerkzeugen vorhalten.

Von diesem Stand der Technik unterscheidet sich die vorliegende Erfindung durch ihre kennzeichnenden Merkmale. Demnach zeichnet sich ein erfindungsgemäßes Roboterwerkzeug der eingangs genannten Art dadurch aus, dass der Druckluftantrieb, die Lagerung und die Kupplung mit Standardwerkzeug zerstörungsfrei voneinander trennbare Module sind.

Diese Trennbarkeit eröffnet die Möglichkeit, das jeweilige Roboterwerkzeug durch Austausch eines seiner Bestandteile an eine veränderte Bearbeitungsaufgabe oder eine andere Werkzeugmaschine anzupassen.

Das zerstörungsfreie Öffnen und Schließen der jeweiligen Verbindung erlaubt insbesondere den Austausch eines ersten Druckluftantriebs gegen einen zweiten Druckluftantrieb bei einer Änderung der Bearbeitungsaufgabe. Bei vorgegebener Druckluftversorgung zeichnen sich die unterschiedlichen Druckluftantriebe zum Beispiel durch unterschiedlich hohe Spindeldrehzahlen und Spindeldrehmomente aus.

Analog lässt sich das Roboterwerkzeug durch Austauschen der Kupplung an verschiedene Kupplungen verschiedener Werkzeugmaschinen anpassen. Daher muss nicht eine Vielzahl kompletter Roboterwerkzeuge vorgehalten werden, sondern es reicht aus, nur eine der Zahl der Aufgaben entsprechende Zahl von Druckluftantrieben mit Lagerung vorzuhalten und eine der Zahl der in Frage kommenden separat tauschbaren Kupplungen vorzuhalten.

Eine bevorzugte Ausgestaltung zeichnet sich dadurch aus, dass es zusätzliche eine Auslenkungsvorrichtung aufweist, die zwischen der Lagerung und der Kupplungsvorrichtung angeordnet ist.

Bevorzugt ist auch, dass die Kupplungsvorrichtung eine Kupplungsseite aufweist, die zum Kuppeln des Roboterwerkzeuges mit einem Roboterarm oder einer Werkzeugmaschine eingerichtet ist, und dass die Kupplungsvorrichtung auf ihrer der Kupplungsseite abgewandt gegenüber liegenden Seite einen Kupplungsflansch aufweist.

Ferner ist bevorzugt, dass die Auslenkungsvorrichtung einen kupplungsseitigen Flansch, eine lagerungsseitige Grundplatte und elastische Elemente aufweist, welche den kupplungsseitigen Flansch elastisch mit der Grundplatte verbinden.

Eine weitere bevorzugte Ausgestaltung zeichnet sich dadurch aus, dass der kupplungsseitige Flansch mit einem Gegenflansch der Kupplungsvorrichtung mit Schrauben zerstörungsfrei lösbar verbunden ist und dass die lagerungsseitige Grundplatte mit einem weiteren Gegenflansch mit Schrauben zerstörungsfrei lösbar verbunden ist.

Bevorzugt ist auch, dass die Auslenkvorrichtung einen zentralen Punkt besitzt, um den herum die lagerungsseitige Grundplatte verschwenkbar ist, wobei Schwenkwinkel in einer x-y-Ebene liegende Anteile und in einer y-z-Ebene liegende Anteile aufweisen, die x-Richtung parallel zu einer Längsachse des Roboterwerkzeugs in der Neutralposition mit Schwenkwinkel gleich Null ist, und die die Richtungen x, y, und z ein rechtshändig rechtwinkliges Koordinatensystem bilden.

Ferner ist bevorzugt, dass die Lagerung eine Aufnahme aufweist, die zur Aufnahme des Druckluftantriebs eingerichtet ist, und dass die Lagerung auf ihrer der Aufnahme abgewandt gegenüber liegenden Seite den auslenkungsvorrichtungsseitigen, weiteren Gegenflansch aufweist.

Eine weitere bevorzugte Ausgestaltung zeichnet sich dadurch aus, dass die Aufnahme ein halboffener Hohlraum ist, dessen Form bevorzugt komplementär zur äußeren Form von einem Teil des Gehäuses des Druckluftantriebs ist, wobei diese Form kreiszylindrisch ist.

Bevorzugt ist auch, dass das Gehäuse des Druckluftantriebs eine kreiszylindrische äußere Grundform aufweist und dass das Gehäuse wenigstens eine radial über seine kreiszylindrische Grundform herausragende Stützstruktur aufweist, die in Richtung einer Zylinderachse einen Abstand zum lagerungsseitigen Ende des Gehäuses des Druckluftantriebs aufweist

Eine weitere bevorzugte Ausgestaltung zeichnet sich durch eine Überwurfmutter aus, die sich an der Stützstruktur des Gehäuses abstützt und ein Innengewinde besitzt, mit dem sie mit einem Außengewinde der Lagerung verschraubt ist.

Eine weitere bevorzugte Ausgestaltung zeichnet sich dadurch aus, dass die Auslenkungsvorrichtung einen kupplungsseitigen Flansch aufweist, der eine Becherform mit Wand und Boden aufweist, wobei in dem Flansch eine Scheibe beweglich angeordnet ist, deren Bewegung durch die Becherwand geführt wird, und wobei an der Scheibe eine Abfolge aus einer ersten Flachdrahtdruckfeder, einer Blechscheibe und einer zweite Flachdrahtdruckfeder anliegt, und wobei an der zweiten Flachdrahtdruckfeder an deren der Blechscheibe abgewandten Seite eine Zwischenscheibe anliegt und wobei sich an der der zweiten Flachdrahtdruckfeder abgewandten Seite der Zwischenscheibe mehrere aus Stapeln von Flachdrahtdruckfedern gebildete Federpakete abstützen und wobei an der der der Zwischenscheibe abgewandten Seite der Federpakete eine Gelenkzapfenplatte anliegt, welche in einem zentralen Bereich ihrer den Federpaketen abgewandten Seite mit der lagerungsseitigen Grundplatte verbunden ist, und wobei an einem radial außerhalb des zentralen Bereichs der Gelenkzapfenplatte liegenden Bereich der Gelenkzapfenplatte ein sich radial einwärts erstreckender Rand eines Deckels anliegt, der mit der Becherwand des kupplungsseitigen Flansches verschraubt ist, so dass die Reihenschaltung der genannten Federpakete und Federn unter Vorspannung zwischen dem Rand des Deckels und der Blechscheibe eingespannt ist.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert.

Dabei zeigen, jeweils in schematischer Form:
Figur 1 eine Seitenansicht des bekannten Roboterwerkzeugs;
Figur 2 einen Schnitt durch ein Ausführungsbeispiel eines erfindungsgemäßen Roboterwerkzeugs; und Figur 3 einen Schnitt durch eine optional als weiterer Bestandteil des Roboterwerkzeugs verwendbare Auslenkungsvorrichtung;und
Figur 3 eine Schnittdarstellung einer optional als Bestandteil des Roboterwerkzeugs vorhandenen Auslenkvorrichtung.
Dabei bezeichnen gleiche Bezugszeichen in verschiedenen Figuren jeweils gleiche oder zumindest ihrer Funktion nach vergleichbare Elemente.

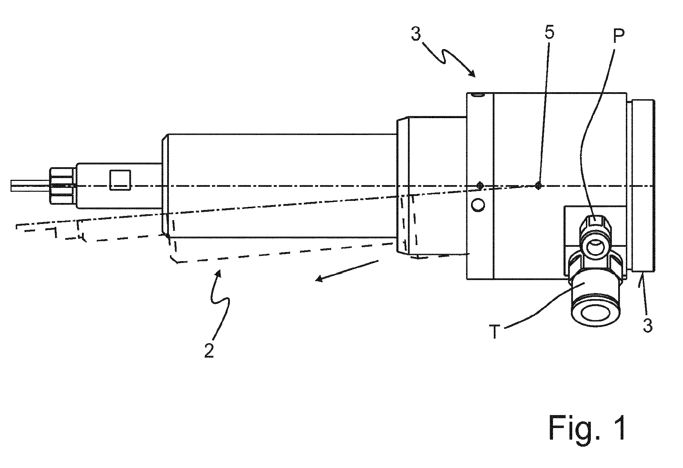

Figur 1 zeigt das bekannte Roboterwerkzeug der Anmelderin in einer Seitenansicht. Dieses Roboterwerkzeug ist eine Baugruppe, die im Wesentlichen aus einer Schleifspindel 2 und einer Werkzeugaufnahme 3 besteht. Diese Baugruppe wird bei ihrer Herstellung aus diesen beiden Bestandteilen zusammengefügt und ist bei ihrer späteren Verwendung in Produktionsumgebungen nicht mit Standardwerkzeug in ihre Bestandteile zerlegbar.

Am rechten Ende der Baugruppe befindet sich ein Gewinde 3, mit dem die ganze Baugruppe an einen Roboterarm oder eine Werkzeugmaschine montiert werden kann. Am linken Ende der Baugruppe befindet sich die drehbare Spindel, die zur Aufnahme eines Werkzeugs dient und die durch einen integrierten Druckluftantrieb angetrieben wird.

Die Schleifspindel ist in der Werkzeugaufnahme um einen zentralen Punkt S herum schwenkbar gelagert. Bei einer Auslenkung der Schleifspindel 3, wie sie in der Fig. 1 als Beispiel gestrichelt dargestellt ist, wird in der Werkzeugaufnahme eine Rückstellkraft pneumatisch erzeugt.

Der Druckluftantrieb der drehbaren Spindel befindet sich im Inneren der Schleifspindel. Er wird über einen Anschluss P der Werkzeugaufnahme 3 mit einem Druckluftreservoir verbunden. Ein Anschluss T dient zur davon separaten Einspeisung von Druckluft in die Werkzeugaufnahme für die Erzeugung der elastischen Rückstellkraft, mit der die Schleifspindel bei einer relativ zur Werkzeugaufnahme erfolgenden Schwenkbewegung wieder in ihre neutrale Nullstellung zurückgestellt wird.

Die Schleifspindel besitzt eine zylindrische Grundform. Die die Werkzeugaufnahme besitzt ebenfalls eine zylindrische Grundform mit einem vergleichsweise größeren Innendurchmesser, so dass die in der Werkzeugaufnahme gelagerte Schleifspindel eine ausreichende Schwenkbewegungsfreiheit besitzt. Der Luftspalt zwischen der Schleifspindel mit dem Druckluftantrieb und der Werkzeugaufnahme, der bei dieser Konstruktion zwingend erforderlich ist, wird bei der bekannten Konstruktion durch einen insbesondere radial elastischen Wellendichtring verschlossen, um ein Eindringen von Schmutz und/oder Spänen zu verhindern. Dieser Wellendichtring ist zum Beispiel in der Regel nicht zerstörungsfrei demontierbar.

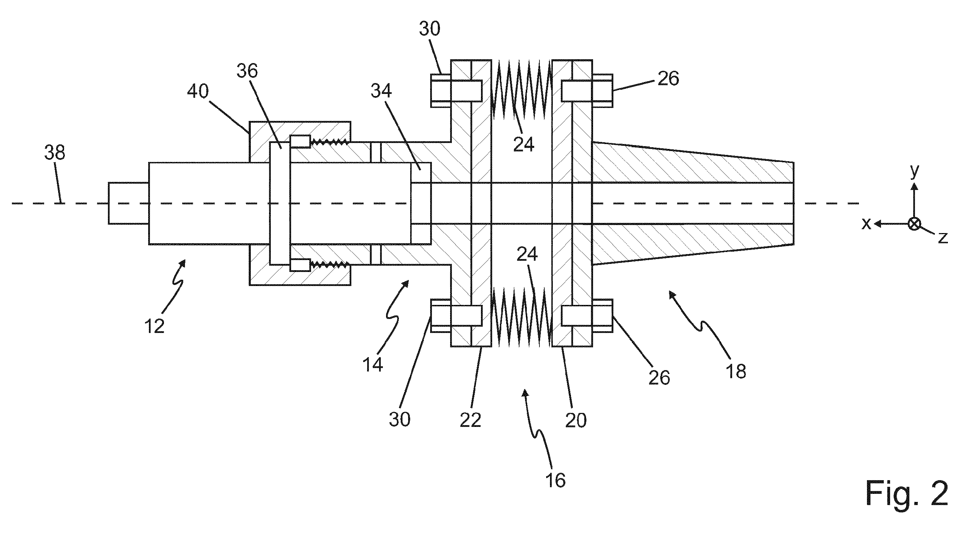

Figur 2 zeigt im Einzelnen ein Ausführungsbeispiel eines erfindungsgemäßen Roboterwerkzeuges 10 in einer stark schematisierten Form. Das hier dargestellte Roboterwerkzeug weist im Wesentlichen vier Hauptbestandteile auf, nämlich einen Druckluftantrieb 12, eine Lagerung 14 für den Druckluftantrieb, eine Auslenkungsvorrichtung 16 und eine Kupplungsvorrichtung 18. Dabei stellt die Auslenkungsvorrichtung einen optional vorhandenen Bestandteil dar, der ggf. auch durch eine in sich starre Zwischenscheibe ersetzt werden kann, oder der auch einfach weggelassen werden kann. Die Kupplung kann ohne Zwischenscheibe direkt auf die Aufnahme geschraubt werden.

Die Kupplungsvorrichtung 18 weist eine Kupplungsseite aus, die zum Kuppeln des Roboterwerkzeuges mit einem Roboterarm oder einer Werkzeugmaschine eingerichtet ist.

Darüber hinaus weist die Kupplungsvorrichtung auf ihrer der Kupplungsseite abgewandt gegenüberliegenden Seite einen Kupplungsflansch auf.

Die Auslenkungsvorrichtung weist einen kupplungsseitigen Flansch 20, eine lagerungsseitige Grundplatte 22 und elastische Elemente 24 auf, welche den kupplungsseitigen Flansch 20 elastisch mit der Grundplatte 22 verbinden. Der kupplungsseitige Flansch 20 ist mit einem Gegenflansch der Kupplungsvorrichtung 18 mit Schrauben 26 zerstörungsfrei lösbar verbunden. Die lagerungsseitige Grundplatte 22 ist mit einem weiteren Gegenflansch 28 mit Schrauben 30 zerstörungsfrei lösbar verbunden.

Die lagerungsseitige Grundplatte 22 ist durch eine elastische Verformung der elastischen Elemente 24 verschwenkbar. Die Schwenkwinkel können in der x-y-Ebene liegende Anteile und in der y-z-Ebene liegende Anteile aufweisen. Dabei ist die x-Richtung parallel zu einer Längsachse des Roboterwerkzeugs in der Neutralposition mit Schwenkwinkel gleich Null und die die Richtungen x, y, und z bilden ein rechtshändig rechtwinkliges Koordinatensystem.

Die Lagerung weist eine Aufnahme 34 auf, die zur Aufnahme des Druckluftantriebs 12 eingerichtet ist. Darüber hinaus weist die Lagerung 14 auf ihrer der Aufnahme abgewandt gegenüberliegenden Seite den auslenkungsvorrichtungsseitigen, weiteren Gegenflansch 28 auf.

Die Aufnahme 34 ist ein halboffener Hohlraum, dessen Form bevorzugt komplementär zur äußeren Form von einem Teil des Gehäuses des Druckluftantriebs 12 ist. Diese Form ist bevorzugt kreiszylindrisch.

Der Druckluftantrieb weist in einer bevorzugten Ausgestaltung eine oder mehrere Turbinen auf. Alternativ ist bevorzugt, dass der Druckluftantrieb als Druckluftmotor mit einem oder mehreren einer wechselnden Druckbelastung ausgesetzten Kolben verwirklicht ist. In einer weiteren bevorzugten Alternative ist der Druckluftantrieb als Flügelzellenmotor verwirklicht. Das Gehäuse des Druckluftantriebs 12 weist bevorzugt eine kreiszylindrische äußere Grundform auf. Darüber hinaus weist das Gehäuse wenigstens eine radial über seine kreiszylindrische Grundform herausragende Stützstruktur 36 auf, die in Richtung der Zylinderachse 38 einen Abstand zum lagerungsseitigen Ende des Gehäuses des Druckluftantriebs 12 aufweist. Der Abstand beträgt bevorzugt wenigstens ein Drittel der Länge des Gehäuses. Der über die Stützstruktur 36 in Richtung zur Lagerung 14 hinausstehende Teil des Gehäuses ist durch seine Abmessungen dazu eingerichtet, in der Aufnahme 34 der Lagerung 14 spielfrei aufgenommen zu werden.

Eine Überwurfmutter 40 stützt sich an der Stützstruktur des Gehäuses ab. Sie besitzt ein Innengewinde, mit dem sie mit einem Außengewinde der Lagerung verschraubt ist. Dabei wird die Stützstruktur des Gehäuses des Druckluftantriebs auf einen Rand einer den Druckluftantrieb aufnehmenden Öffnung der Lagerung gepresst, so dass der Druckluftantrieb 12 im verschraubten Zustand starr und fest mit der Lagerung 14 verbunden ist.

Durch Lösen der Überwurfmutter kann der Druckluftantrieb auch in Produktionsumgebungen einfach ausgewechselt werden, so dass z.B. eine Anpassung der Drehzahl und des Drehmomentes der Werkzeugspindel an eine geänderte Bearbeitungsaufgabe durch eine Auswechslung des Druckluftantriebs erfolgen kann. Ein Austausch des gesamten Roboterwerkzeugs ist dagegen nicht mehr erforderlich.

Für den Fall, dass eine andere Kupplungsvorrichtung 18 erforderlich ist, kann diese durch Lösen der Schrauben 26 ausgewechselt werden. Für den Fall, dass eine andere Auslenkungsvorrichtung erforderlich ist, um zum Beispiel größere oder kleinere Rückstellkräfte zu erzeugen, kann diese durch Lösen der Schrauben 26 und 30 ausgewechselt werden.

Außerdem kann die Auslenkungsvorrichtung 16 zum Beispiel auch durch eine starre Zwischenscheibe, insbesondere eine Aluminiumscheibe ersetzt werden, wenn ein in sich starres Roboterwerkzeug erforderlich ist. Die Scheibe muss lediglich die gleichen Gewindebohrungen aufweisen wie die lagerungsseitige Grundplatte und der kupplungsseitige Flansch. Die Kupplung kann ohne Zwischenscheibe direkt auf die Aufnahme geschraubt werden. Mit anderen Worten: Die Auslenkungsvorrichtung kann auch ersatzlos weggelassen werden.

Ein Luftkanal 42 dient zur Versorgung des Druckluftantriebs 12 mit Druckluft. Innerhalb der Auslenkungsvorrichtung 16 ist der Luftkanal 42 als flexibler Schlauch definiert.

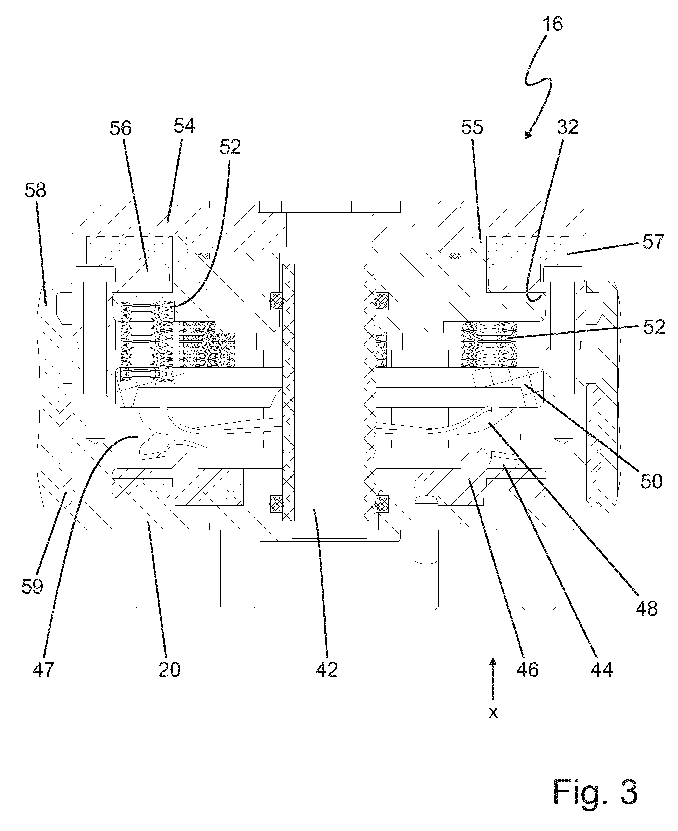

Figur 3 zeigt eine bevorzugte Ausgestaltung einer Auslenkungsvorrichtung 16. Die Auslenkungsvorrichtung 16 weist den kupplungsseitigen Flansch 20 auf, der eine Becherform mit Wand und Boden aufweist. In dem Flansch 20 ist eine Scheibe 46 in x-Richtung beweglich angeordnet, deren Bewegung durch die Becherwand geführt wird. Auf der Scheibe liegt eine erste Flachdrahtdruckfeder 44, eine Blechscheibe 47 und eine zweite Flachdrahtdruckfeder 48 an.

An der zweiten Flachdrahtdruckfeder 48 liegt an deren der Blechscheibe 47 abgewandten Seite eine Zwischenscheibe 50 an. An der der zweiten Flachdrahtdruckfeder 48 abgewandten Seite der Zwischenscheibe 50 stützen sich mehrere aus Stapeln von Flachdrahtdruckfedern gebildete Federpakete 52 ab, die bevorzugt auf einer Kreislinie äquidistant zueinander verteilt sind. Es handelt sich bevorzugt um sieben Federpakete. Die Abmessungen der Federpakete in der y-Richtung beträgt etwa ein Sechstel der Abmessungen der ersten beiden Flachdrahtdruckfedern 44 und 48.

Auf der der Zwischenscheibe 50 abgewandten Seite der Federpakete 52 liegt eine Gelenkzapfenplatte 55 an. Diese ist in einem zentralen Bereich ihrer den Federpaketen 52 abgewandten Seite mit der lagerungsseitigen Grundplatte 54 verbunden. An einem radial außerhalb des zentralen Bereichs der Gelenkzapfenplatte 55 liegenden Bereich der Gelenkzapfenplatte liegt ein sich radial einwärts erstreckender Rand eines Deckels 56 an. Der Deckel 56 ist im Übrigen mit der Becherwand des kupplungsseitigen Flansches 20 verschraubt, so dass die Reihenschaltung der genannten Federpakete und Federn unter Vorspannung zwischen dem Rand des Deckels 56 und der Scheibe 46 eingespannt ist. Die Gelenkplatte 55 ist durch eine Verformung der elastischen Elemente, hier also der Federpakete und/oder der Flachdrahtdruckfedern um Kipp-Punkte 32 schwenkbar. Die Kipp-Punkte sind Kontaktstellen, an denen sich die Gelenkzapfenplatte 55 an dem Deckel 56 abstützt. Die Kontaktpunkte ändern ihre Lage je nachdem, wie die elastischen Elemente verformt sind.

Die lagerungsseitige Grundplatte 54 ragt in x-Richtung ein Stück weit aus der durch den Rand des Deckels 56 definierten Öffnung des Deckels 56 heraus. Der sich zwischen dem Rand des Deckels 56 und der lagerungsseitigen Grundplatte ergebende Zwischenraum ist mit einem nachgiebigen Schutzelement 57 aus Schaumstoff gefüllt. Durch entgegengesetzt zur x-Richtung einwirkende Kräfte kann die lagerungsseitige Grundplatte 22 elastisch verschwenkt werden.

Um die dabei auftretenden Rückstellkräfte, die von der Vorspannung der genannten Federn abhängen, zu verstellen, kann die Lage der Scheibe 46 in x-Richtung verstellt werden. Zu diesem Zweck ist die Scheibe 46 über in der Zeichnungsebene nicht dargestellte Radialstifte mit dem Stellring 59 verbunden. Der Stellring 59 weist ein Außengewinde auf, das in ein Innengewinde der drehbaren Stellmutter 58 eingreift. Eine Drehbewegung der Stellmutter erzeugt damit eine Bewegung des Stellrings 59 in x-Richtung, die sich auf die Scheibe 46 überträgt.

Die drei Federn, beziehungsweise die beiden durchmessergroßen Flachdrahtdruckfedern und das Ensemble der kleineren Federpakete weisen bevorzugt unterschiedliche Federkonstanten auf. Dabei ist die Federkonstante der Federpakete bevorzugt deutlich kleiner als die Federkonstante der großen Flachdrahtdruckfedern. Dadurch wird in der Summe eine mit zunehmender Auslenkung progressiv ansteigende Rückstellkraft erzeugt. Die drei Federn stellen Ausgestaltungen der elastischen Elemente 24 dar. Die elastischen Elemente können auch durch Spiralfedern oder elastische Festkörper wie Blöcke aus Gummi oder einem anderen elastischen Material verwirklicht werden.

## Patentansprüche

1. Roboterwerkzeug (10) mit einem zum Drehantrieb einer Werkzeugspindel eingerichteten Druckluftantrieb (12), einer Lagerung (14) des Druckluftantriebs und einer mit der Lagerung drehfest verbundenen Kupplungsvorrichtung (18), die zum Kuppeln des Roboterwerkzeugs mit einem Roboter oder einer Werkzeugmaschine eingerichtet ist, **dadurch gekennzeichnet, dass** der Druckluftantrieb, die Lagerung und die Kupplung mit Standardwerkzeug zerstörungsfrei voneinander trennbare Module sind.

2. Roboterwerkzeug (10) nach Anspruch 1, **dadurch gekennzeichnet, dass** es zusätzliche eine Auslenkungsvorrichtung (16) aufweist, die zwischen der Lagerung und der Kupplungsvorrichtung angeordnet ist.

3. Roboterwerkzeug (10) nach einem der vorhergehenden Ansprüche, **dadurch gekennzeichnet, dass** die Kupplungsvorrichtung eine Kupplungsseite aufweist, die zum Kuppeln des Roboterwerkzeuges mit einem Roboterarm oder einer Werkzeugmaschine eingerichtet ist, und dass die Kupplungsvorrichtung auf ihrer der Kupplungsseite abgewandt gegenüberliegenden Seite einen Kupplungsflansch aufweist.

4. Roboterwerkzeug (10) nach Anspruch 2 und 3, **dadurch gekennzeichnet, dass** die Auslenkungsvorrichtung (16) einen kupplungsseitigen Flansch (20), eine lagerungsseitige Grundplatte (22) und elastische Elemente (24) aufweist, welche den kupplungsseitigen Flansch (20) elastisch mit der Grundplatte (22) verbinden.

5. Roboterwerkzeig (10) nach Anspruch 4, **dadurch gekennzeichnet, dass** der kupplungsseitige Flansch (20) mit einem Gegenflansch der Kupplungsvorrichtung (18) mit Schrauben (26) zerstörungsfrei lösbar verbunden ist und dass die lagerungsseitige Grundplatte (22) mit einem weiteren Gegenflansch (28) mit Schrauben (30) zerstörungsfrei lösbar verbunden ist.

6. Roboterwerkzeug (10) nach Anspruch 2, **dadurch gekennzeichnet, dass** die lagerungsseitige Grundplatte (22) der Auslenkvorrichtung (16) verschwenkbar ist, wobei Schwenkwinkel in einer x-y-Ebene liegende Anteile und in einer y-z-Ebene liegende Anteile aufweisen, die x-Richtung parallel zu einer Längsachse des Roboterwerkzeugs in der Neutralposition mit Schwenkwinkel gleich Null ist, und die die Richtungen x, y, und z ein rechtshändig rechtwinkliges Koordinatensystem bilden.

7. Roboterwerkzeug (10) nach einem der vorhergehenden Ansprüche, **dadurch gekennzeichnet, dass** die Lagerung (14) eine Aufnahme (34) aufweist, die zur Aufnahme des Druckluftantriebs (12) eingerichtet ist, und dass die Lagerung auf ihrer der Aufnahme abgewandt gegenüberliegenden Seite den auslenkungsvorrichtungsseitigen, weiteren Gegenflansch (28) aufweist.

8. Roboterwerkzeug (10) nach einem der vorhergehenden Ansprüche, **dadurch gekennzeichnet, dass** die Aufnahme (34) ein halboffener Hohlraum ist, dessen Form bevorzugt komplementär zur äußeren Form von einem Teil des Gehäuses des Druckluftantriebs (12) ist, wobei diese Form kreiszylindrisch ist.

9. Roboterwerkzeug (10) nach einem der vorhergehenden Ansprüche, **dadurch gekennzeichnet, dass** das Gehäuse des Druckluftantriebs (12) eine kreiszylindrische äußere Grundform aufweist und dass das Gehäuse wenigstens eine radial über seine kreiszylindrische Grundform herausragende Stützstruktur (36) aufweist, die in Richtung einer Zylinderachse (38) einen Abstand zum lagerungsseitigen Ende des Gehäuses des Druckluftantriebs (12) aufweist

10. Roboterwerkzeug (10) nach einem der vorhergehenden Ansprüche, **gekennzeichnet durch** eine Überwurfmutter (40), die sich an der Stützstruktur des Gehäuses abstützt und ein Innengewinde besitzt, mit dem sie mit einem Außengewinde der Lagerung verschraubt ist.

11. Roboterwerkzeug (10) nach Anspruch 2 oder nach Anspruch 2 und einem der Ansprüche 3 - 10, **dadurch gekennzeichnet, dass** die Auslenkungsvorrichtung (16) einen kupplungsseitigen Flansch (20) aufweist, der eine Becherform mit Wand und Boden aufweist, wobei in dem Flansch (20) eine Scheibe (46) beweglich angeordnet ist, deren Bewegung durch die Becherwand geführt wird, und wobei an der Scheibe eine Abfolge aus einer ersten Flachdrahtdruckfeder (44), einer Blechscheibe (47) und einer zweite Flachdrahtdruckfeder (48) anliegt, und wobei an der zweiten Flachdrahtdruckfeder (48) an deren der Blechscheibe (47) abgewandten Seite eine Zwischenscheibe (50) anliegt und wobei sich an der der zweiten Flachdrahtdruckfeder (48) abgewandten Seite der Zwischenscheibe (50) mehrere aus Stapeln von Flachdrahtdruckfedern gebildete Federpakete (52) abstützen und wobei an der der der Zwischenscheibe (50) abgewandten Seite der Federpakete (52) eine Gelenkzapfenplatte (55) anliegt, welche in einem zentralen Bereich ihrer den Federpaketen (52) abgewandten Seite mit der lagerungsseitigen Grundplatte verbunden ist, und wobei an einem radial außerhalb des zentralen Bereichs der Gelenkzapfenplatte (55) liegenden Bereich der Gelenkzapfenplatte ein sich radial einwärts erstreckender Rand eines Deckels (56) anliegt, der mit der Becherwand des kupplungsseitigen Flansches (20) verschraubt ist, so dass die Reihenschaltung der genannten Federpakete und Federn unter Vorspannung zwischen dem Rand des Deckels (56) und der Blechscheibe (47) eingespannt ist.

12. Roboterwerkzeug (10) nach Anspruch 11, **dadurch gekennzeichnet, dass** die lagerungsseitige Grundplatte (52) ein Stück weit aus der durch den Rand des Deckels (56) definierten Öffnung des Deckels (56) herausragt, so dass die lagerungsseitige Grundplatte (22) elastisch verschwenkt werden kann.

13. Roboterwerkzeug (10) nach Anspruch 12, **dadurch gekennzeichnet, dass** die Lage der Scheibe (46) verstellbar ist, wobei die Scheibe (46) mit einem Stellring (59) verbunden ist, der ein Außengewinde aufweist, das in ein Innengewinde einer drehbaren Stellmutter (58) eingreift, so dass eine Drehbewegung der Stellmutter eine Bewegung des Stellrings (59) erzeugt, die sich auf die Scheibe (46) überträgt.

14. Roboterwerkzeug (10) nach einem der vorhergehenden Ansprüche, **dadurch gekennzeichnet, dass** die beiden durchmessergroßen Flachdrahtdruckfedern und das Ensemble der kleineren Federpakete unterschiedliche Federkonstanten aufweisen.

15. Roboterwerkzeug (10) nach Anspruch 14, **dadurch gekennzeichnet, dass** die Federkonstante der Federpakete deutlich kleiner als die Federkonstante der großen Flachdrahtdruckfedern ist.
